# EUROPÄISCHE PATENTSCHRIFT

(11) **EP 3 992 482 B1**
(45) Veröffentlichungstag und Bekanntmachung des Hinweises auf die Patenterteilung: **06.12.2023**
(21) Anmeldenummer: 21203431.8
(22) Anmeldetag: 19.10.2021
(51) Int. Cl.: F16C 19/28, F16C 19/22, F16C 33/46, F16C 33/58, F16C 33/60, F16C 43/04, F16C 33/76, F16C 41/04

(54) **LAGEREINHEIT**
BEARING UNIT
UNITÉ DE PALIER

(30) Priorität: 27.10.2020 DE 102020128256
(43) Veröffentlichungstag der Anmeldung: 04.05.2022
(73) Patentinhaber: Aktiebolaget SKF, 415 50 Göteborg (SE); SKF CZ, a.s., 17004 Praha 7 (CZ)
(72) Erfinder: Assmann, Jörg, 97421 Schweinfurt (DE); Cheng, Xu, 3825 Amersfoort (NL); Meaney, Paul, 97440 Werneck (DE); Novotny, Ondrej, 53003 Pardubice (CZ)
(74) Vertreter: Schonecke, Mitja

(56) Entgegenhaltungen:
- DE-A1-102016 211 630
- JP-A- 2009 264 404
- JP-A- 2017 002 970

## Beschreibung

Die vorliegende Erfindung betrifft eine Lagereinheit gemäß dem Oberbegriff von Anspruch Bei der Demontage von Rädern bei Zügen, beispielsweise zur Wartung oder Reparatur, werden üblicherweise die Lagereinheiten, mittels denen die Räder an der Radachse montiert sind, ebenfalls demontiert. Dabei kann es vorkommen, dass die Lagereinheit beim Demontieren des Rads nicht schadenfrei demontiert werden kann, so dass sie vor der Neumontage des Rads wiederaufgearbeitet oder sogar ersetzt werden muss. Beispielsweise können beim Demontieren äußere Verunreinigungen, wie beispielsweise Staub, Partikel oder dergleichen, in das Lager eindringen und/oder ein Schmiermittel kann aus dem Lager austreten. Auch ist es möglich, dass Teile des Lagers beim Demontieren des Rads beschädigt werden. Dies kann dazu führen, dass die Lagereinheiten in den angestrebten Wartungsintervallen für der Räder mehrfach ausgetauscht bzw. wiederaufgearbeitet werden müssen, wodurch sich die Kosten für die Wartungsarbeiten aufgrund des erhöhten Material- und/oder Arbeitsaufwand erhöhen DE 10 2016 211 630 zeigt eine gattungsgemäße Lagereinheit.

Es ist deshalb eine Aufgabe der vorliegenden Erfindung, eine Lagereinheit mit einer verbesserten Einsatzdauer auch im Wartungsfall bereitzustellen.

Diese Aufgabe wird durch die Lagereinheit gemäß Anspruch 1 gelöst.

Im Folgenden wird eine Lagereinheit, insbesondere für Räder eines Schienenfahrzeugs, bereitgestellt, die einen ersten Lagerring und einen zweiten Lagerring aufweist, wobei der erste Lagerring und der zweite Lagerring relativ zueinander rotierbar sind und zwischen sich einen Wälzraum definieren, in dem mehrere Zylinderrollen angeordnet sind, die eine relative Rotation des ersten Lagerrings und des zweiten Lagerrings zueinander ermöglichen, wobei der erste und/oder der zweite Lagerring zweiteilig ausgestaltet ist und einen ersten Lagerringteil und einen zweiten Lagerringteil aufweisen.

Die Wälzkörper sind dabei in mehreren Reihen, beispielsweise zwei, im Wälzraum angeordnet.

Um die Einsatzdauer des Lagers zu verbessern, so dass insbesondere ein gewünschtes Wartungsintervall erreicht werden kann, ohne dass die Lagereinheit aufgrund von Schmiermittelverlust oder Schäden, die beim Demontieren eines Rads entstehen können, wiederaufgearbeitet oder sogar ersetzt werden muss, sind der erste Lagerringteil und der zweite Lagerringteil mit einem ersten Verbindungselement verbunden, und der erste und der zweite Lagerringteil liegen in der axialen Richtung zumindest teilweise aneinander an. Dadurch können Verunreinigungen zuverlässig am Eindringen in den Wälzraum gehindert werden. Ferner wird bei entsprechender Bearbeitung der aneinander liegenden Flächen der beiden Lagerringteile, indem die beiden aneinander liegenden Flächen erfindungsgemäss möglichst glatt sind, eine Sogwirkung erzielt, so dass die beiden Lagerringteile in einem gewissen Maß aneinanderhaften.

Sind der erste und der zweite Lagerring zweiteilig ausgebildet, sind die Lagerringteile des ersten Lagerrings mit dem ersten Verbindungselement verbunden, während die Lagerringteile des zweiten Lagerrings mit einem zweiten Verbindungselement, das beispielsweise als ein Spannring ausgebildet ist, verbunden sein können. Bevorzugt kann ein solcher Spannring aus Stahl hergestellt sein.

Eine derartige Ausgestaltung ist insbesondere bevorzugt, wenn der erste Lagerring ein Außenring und der zweite Lagerring ein Innenring ist.

Erfindungsgemäß weist das erste Verbindungselement zumindest ein erstes Element und ein zweites Element auf. Dadurch kann einem Schmiermittelverlust entgegengewirkt werden. Bevorzugt ist das erste Element des Verbindungselements als ein Trägerelement für das zweite Element des Verbindungselements gebildet. Dadurch können beispielsweise das erste Element und das zweite Element übereinander angeordnet werden und eine Ausdehnung des Verbindungselements reduziert werden. Beispielsweise kann auch das Verbindungselement vorgefertigt werden, wodurch der Zusammenbau der Lagereinheit effizienter wird.

Ferner kann das erste Element an seiner dem Wälzraum in der radialen Richtung abgewandten Seite eine Aussparung aufweisen, in die das zweite Element formschlüssig eingepasst ist. Dies hat insbesondere den Vorteil, dass auf weitere Befestigungsmittel, wie beispielsweise Klebstoff, verzichtet werden kann. Dadurch kann die Herstellung der Lagereinheit weiter vereinfacht werden.

Gemäß einer weiteren Ausführungsform ist das erste Element dazu ausgelegt, den Wälzraum abzudichten, und das zweite Element ist dazu ausgelegt, das erste Element zu stabilisieren. Dafür können das erste Element und das zweite Element bevorzugt aus verschiedenen Materialen hergestellt sein. Insbesondere kann das Material für das erste Element ausgewählt sein, eine gute Dichteigenschaft zu haben, während das Material für das zweite Element gewählt ist, um eine hohe Steifigkeit bereitzustellen, um so das erste Element zu stabilisieren.

Bevorzugt ist das erste Element aus einem Elastomer, insbesondere thermoplastischen Elastomer, wie zum Beispiel einem thermoplastischen Elastomer auf Urethan-Basis (TPU), und das zweite Element aus einem versteifenden Material, insbesondere thermoplastischen Kunststoff, wie beispielsweise Polyoxymethylen (POM) hergestellt.

Gemäß einer weiteren Ausführungsform weisen der erste und der zweite Lagerringteil jeweils eine Aussparung auf, wobei die Aussparung jeweils an der radial dem Wälzraum abgewandten Seite des jeweiligen Lagerringteils angeordnet ist, wobei die beiden Aussparungen dazu ausgelegt sind, in einem Zustand, in den die beiden Lagerringteile aneinander anliegen, eine gemeinsame Aussparung zu bilden, in der das Verbindungselement aufgenommen ist. Indem das Verbindungselement in der Aussparung vorgesehen wird, kann die Dichtwirkung der beiden aneinander liegenden Lagerringteile durch das Verbindungselement, insbesondere durch das erste Element des Verbindungselements, das dazu ausgelegt sein kann, den Wälzraum abzudichten, weiter verbessert werden.

Weiterhin kann in der Aussparung zumindest eine Ausnehmung, wie beispielsweise eine Kerbe oder Fase vorgesehen sein, die mit zumindest einer entsprechenden Auskragung oder einem Vorsprung, die bzw. der an dem Verbindungselement angeordnet ist, zusammenwirken kann, um beispielsweise das Verbindungselement gegen ein Verschieben in der Aussparung zu sichern.

Gemäß einer weiteren Ausführungsform ist die Lagereinheit als ein Kassettenlager ausgebildet, und weist jeweils auf der axialen Außenseite eine Dichtung auf, die dazu ausgelegt sind, den Wälzraum zur Außenumgebung hin abzudichten. Dadurch kann ein im Wesentlichen vollständig abgeschlossenes Kassettenlager bereitgestellt werden, bei dem sowohl der Eintritt von Verunreinigungen von außen in den Wälzraum als auch der Verlust von Schmiermittel aus dem Wälzraum verhindert wird.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

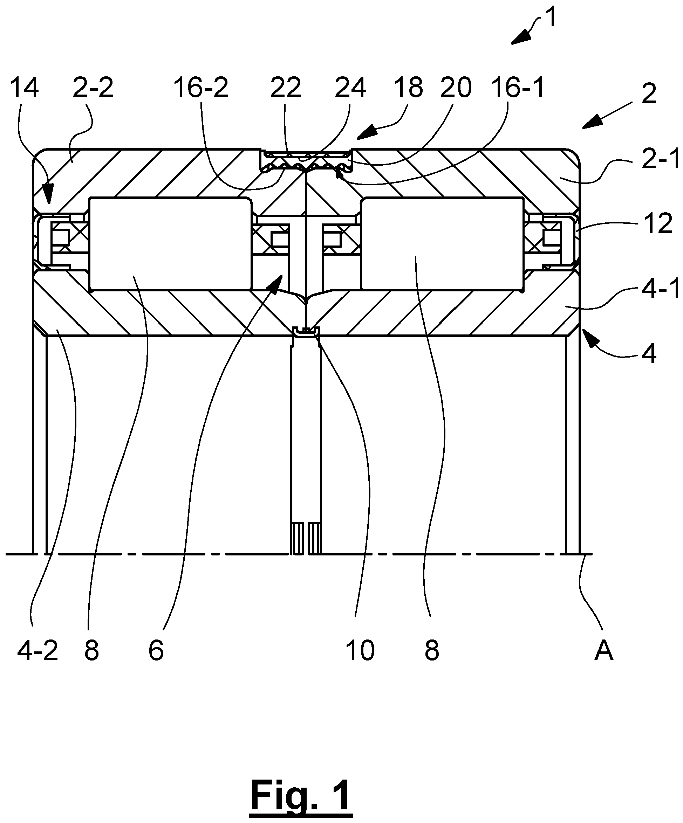

- Fig. 1:: Eine Querschnittsansicht einer Lagereinheit gemäß einem Ausführungsbeispiel.

Im Folgenden werden gleiche oder funktionell gleichwirkende Elemente mit denselben Bezugszeichen gekennzeichnet.

Fig. 1 zeigt eine Lagereinheit 1, die einen Außenring 2 und einen Innenring 4 aufweist. Der Außenring 2 umfasst einen ersten Lagerringteil 2-1 und einen zweiten Lagerringteil 2-2.

Der Innenring 4 umfasst ebenfalls einen ersten Lagerringteil 4-1 und einen zweiten Lagerringteil 4-2. Der Außenring 2 und der Innenring 4 sind relativ zueinander rotierbar und definieren zwischen sich einen Wälzraum 6, in dem mehrere Wälzkörper 8 angeordnet sind, die eine relative Rotation des Außenrings 2 und des Innenrings 4 zueinander ermöglichen. Bei der Lagereinheit 1 der Fig. 1 sind die Wälzkörper 8 als Zylinderrollen gebildet. Nicht erfindungsgemäß können aber auch andere Wälzkörperarten, wie beispielsweise Kugeln, Kegel, etc. verwendet werden.

Die beiden Lagerringteile 4-1, 4-2 des Innenrings 4 sind in dem dargestellten Ausführungsbeispiel mittels eines als Verbindungselement ausgebildeten Spannrings 10 verbunden, der beispielsweise aus einem Metall, wie beispielsweise Stahl, hergestellt sein kann. Ferner ist an den axialen Seiten der Lagereinheit 1 jeweils eine Dichtung 12, 14 angeordnet, die den Wälzraum6 fluiddicht abdichten, so dass weder Verunreinigungen in den Wälzraum 6 eindringen können noch das Schmiermittel aus dem Wälzraum 6 austreten kann.

Die jeweiligen Lagerringteile 2-1, 2-2 des Außenrings 2 liegen in der axialen Richtung, das heißt in der Richtung einer Rotationsachse Ader Lagereinheit 1, zumindest teilweise aneinander an und weisen im Bereich ihres Aneinanderliegens radial außen jeweils eine Aussparung 16-1, 16-2 auf, in der ein Verbindungselement 18 aufgenommen ist.

Selbstverständlich ist gleichermaßen möglich das Verbindungselement 18 am Innenring 4 und den Spannring 10 am Außenring 2 vorzusehen.

Das Verbindungselement 18 weist ein erstes Element 20 und ein zweites Element 22 auf.

Das erste Element 20 ist als Trägerelement für das zweite Element 22 gebildet und hat eine Aussparung 24, die sich an der radial äußeren Seite des ersten Elements 20 befindet, die in der radialen Richtung von dem Wälzraum 6 abgewandt ist. Dabei kann die Aussparung 24 derart ausgebildet sein, dass das zweite Element 22 formschlüssig in das erste Element 20 eingepasst ist.

Bei der Fig. 1 sind das erste Element 20 und das zweite Element 22 aus verschiedenen Materialen hergestellt. Dabei ist das erste Element 20 dazu ausgelegt, den Wälzraum 6 abzudichten. D.h. das Material für das erste Element 20 ist so gewählt, dass es gute Dichteigenschaften hat. Bevorzugt ist daher das erste Element 20 aus einem Elastomer, insbesondere einem thermoplastischen Elastomer, wie zum Beispiel einem thermoplastischen Elastomer auf Urethan-Basis (TPU) hergestellt. Weiterhin ist das zweite Element 22 dazu ausgelegt, das erste Element 20 zu stabilisieren. Dazu kann das Material für das zweite Element 22 eine hohe Steifigkeit haben. Bevorzugt ist daher das zweite Element 22 aus einem versteifenden Material, insbesondere einem thermoplastischen Kunststoff, wie beispielsweise Polyoxymethylen (POM), hergestellt.

Zusammenfassend wird eine Lagereinheit 1 bereitgestellt, die insbesondere als ein Kassettenlager ausgebildet sein kann, und jeweils auf der axialen Außenseite eine Dichtung 12, 14 aufweist, die dazu ausgelegt sind, den Wälzraum 6 zur Außenumgebung hin abzudichten. Durch das zweiteilige Verbindungselement 18, das den ersten und zweiten Lagerringteil 2-1, 2-2 verbindet, wird auch in der radialen Richtung die Abdichtung des Wälzraums 6 verbessert, so dass sowohl der Eintritt von Verunreinigungen von außen in den Wälzraum 6 als auch der Verlust von Schmiermittel aus dem Wälzraum 6 verhindert wird.

### Bezugszeichenliste

- 1: Lagereinheit
- 2: erster Lagerring - Außenring
- 4: zweiter Lagerring - Innenring
- 6: Wälzraum
- 8: Wälzkörper
- 10: Spannring
- 12: Dichtung
- 14: Dichtung
- 16-1, 16-2: Aussparung
- 18: Verbindungselement
- 20: erstes Element
- 22: zweites Element
- 24: Aussparung

- A: Rotationsachse

## Patentansprüche

1. Mehrreihige Zylinderrollenlagereinheit (1), insbesondere für ein Rad eines Schienenfahrzeugs, mit einem ersten Lagerring (2) und einem zweiten Lagerring (4), wobei der erste Lagerring (2) und der zweite Lagerring (4) relativ zueinander rotierbar sind und zwischen sich einen Wälzraum (6) definieren, in dem mehrere Wälzkörper (8) angeordnet sind, die eine relative Rotation des ersten Lagerrings (2) und des zweiten Lagerrings (4) zueinander ermöglichen, wobei die Wälzkörper (8) Zylinderrollen sind, die in mehreren Reihen in dem Wälzraum (6) angeordnet sind, wobei der erste und/oder der zweite Lagerring (2, 4) zweiteilig ausgestaltet ist und einen ersten Lagerringteil (2-1; 4-1) und einen zweiten Lagerringteil (2-2; 4-2) aufweisen, der erste Lagerringteil (2-1; 4-1) und der zweite Lagerringteil (2-2, 4-2) mit einem Verbindungselement (18) verbunden sind,
wobei der erste und der zweite Lagerringteil (2-1, 4-1, 2-2, 4-2) in der axialen Richtung zumindest teilweise aneinander anliegen, **dadurch gekennzeichnet, dass**
die beiden aneinander liegenden Flächen möglichst glatt sind, um eine Sogwirkung zu erzielen, so dass die beiden Lagerringteile (2-1, 4-1, 2-2, 4-2) in einem gewissen Maß aneinanderhaften, wobei das Verbindungselement (18) zumindest ein erstes Element (20) und ein zweites Element (22) aufweist.

2. Lagereinheit gemäß Anspruch 1, wobei der erste und der zweite Lagerringteil (2-1, 4-1, 2-2, 4-2) jeweils eine Aussparung (16-1, 16-2) aufweisen, wobei die Aussparung jeweils an der dem Wälzraum radial abgewandten Seite des jeweiligen Lagerringteils (2-1, 4-1, 2-2, 4-2) angeordnet ist, wobei die beiden Aussparungen (16-1, 16-2) dazu ausgelegt sind, in einem Zustand, in dem die beiden Lagerringteile (2-1, 4-1, 2-2, 4-2) aneinander anliegen, eine gemeinsame Aussparung bilden, in der das Verbindungselement (18) aufgenommen ist.

3. Lagereinheit gemäß einem der vorherigen Ansprüche, wobei der erste und der zweite Lagerring (2; 4) zweiteilig gebildet sind, und die zwei Lagerringteile (2-1, 2-2) des ersten Lagerrings (2) mit dem ersten Verbindungselement (18) und die zwei Lagerringteil (4-1, 4-2) des zweiten Lagerrings (4) mit einem zweiten Verbindungselement (10), insbesondere einem Spannring, bevorzugt aus Stahl, verbunden sind.

4. Lagereinheit gemäß Anspruch 1, wobei das erste Element (20) als ein Trägerelement für das zweite Element (22) gebildet ist.

5. Lagereinheit gemäß Anspruch 1, wobei das erste Element (20) an seiner dem Wälzraum (6) in der radialen Richtung abgewandten Seite eine Aussparung (24) aufweist, in die das zweite Element (22) formschlüssig eingepasst ist.

6. Lagereinheit gemäß einem der Ansprüche 1 bis 5, wobei das erste Element (20) dazu ausgelegt ist, den Wälzraum (6) abzudichten, und das zweite Element (22) dazu ausgelegt ist, das erste Element (20) zu stabilisieren.

7. Lagereinheit gemäß einem der Ansprüche 1 bis 6, wobei das erste und das zweite Element (20, 22) aus verschiedenen Materialen hergestellt sind.

8. Lagereinheit gemäß Anspruch 7, wobei das erste Element (20) aus einem Elastomer, insbesondere einem thermoplastischen Elastomer, und das zweite Element (22) aus einem versteifenden Material, insbesondere einem thermoplastischen Kunststoff, hergestellt ist.

9. Lagereinheit gemäß einem der vorherigen Ansprüche, wobei die Lagereinheit (1) als ein Kassettenlager ausgebildet ist, und jeweils auf der axialen Außenseite eine Dichtung (12, 14) aufweist, die dazu ausgelegt sind, den Wälzraum (6) zur Außenumgebung hin abzudichten.

## Claims

1. Multi-row cylinder-roller bearing unit (1), in particular for a wheel of a rail vehicle, having a first bearing ring (2) and a second bearing ring (4), wherein the first bearing ring (2) and the second bearing ring (4) are rotatable relative to one another and, between them, define a rolling space (6) in which there are arranged multiple rolling bodies (8) which allow a relative rotation of the first bearing ring (2) and the second bearing ring (4) with respect to one another, wherein the rolling bodies (8) are cylinder rollers which are arranged in multiple rows in the rolling space (6), wherein the first and/or the second bearing ring (2, 4) are/is of two-part form and have/has a first bearing-ring part (2-1; 4-1) and a second bearing-ring part (2-2; 4-2), the first bearing-ring part (2-1; 4-1) and the second bearing-ring part (2-2; 4-2) being connected by a connecting element (18), wherein the first bearing-ring part and second bearing-ring part (2-1, 4-1, 2-2, 4-2) at least partially abut axially against one another, **characterized in that** the two surfaces abutting against one another are as smooth as possible in order to achieve a suction action, so that the two bearing-ring parts (2-1, 4-1, 2-2, 4-2) adhere to one another to a certain degree, wherein the connecting element (18) has at least a first element (20) and a second element (22).

2. Bearing unit according to Claim 1, wherein the first bearing-ring part and the second bearing-ring part (2-1, 4-1, 2-2, 4-2) each have a recess (16-1, 16-2), wherein the recess is in each case arranged on that side of the respective bearing-ring part (2-1, 4-1, 2-2, 4-2) which faces radially away from the rolling space, wherein the two recesses (16-1, 16-2) are configured to form, in a state in which the two bearing-ring parts (2-1, 4-1, 2-2, 4-2) abut against one another, a common recess in which the connecting element (18) is received.

3. Bearing unit according to either of the preceding claims, wherein the first and second bearing rings (2; 4) are of two-part form, and the two bearing-ring parts (2-1, 2-2) of the first bearing ring (2) are connected by the first connecting element (18) and the two bearing-ring parts (4-1, 4-2) of the second bearing ring (4) are connected by a second connecting element (10), in particular a clamping ring, preferably composed of steel.

4. Bearing unit according to Claim 1, wherein the first element (20) is formed as a support element for the second element (22).

5. Bearing unit according to Claim 1, wherein, on its side which faces radially away from the rolling space (6), the first element (20) has a recess (24) into which the second element (22) is fitted in a form-fitting manner.

6. Bearing unit according to one of Claims 1 to 5, wherein the first element (20) is configured to seal off the rolling space (6) and the second element (22) is configured to stabilize the first element (20).

7. Bearing unit according to one of Claims 1 to 6, wherein the first and second elements (20, 22) are produced from different materials.

8. Bearing unit according to Claim 7, wherein the first element (20) is produced from an elastomer, in particular a thermoplastic elastomer, and the second element (22) is produced from a stiffening material, in particular a thermoplastic.

9. Bearing unit according to one of the preceding claims, wherein the bearing unit (1) is in the form of a cartridge bearing and, on each axial outer side, has a seal (12, 14) which is configured to seal off the rolling space (6) with respect to the external surroundings.

## Revendications

1. Unité de palier à rouleaux cylindriques à plusieurs rangées (1), notamment pour une roue d'un véhicule ferroviaire, avec une première bague de palier (2) et une deuxième bague de palier (4), la première bague de palier (2) et la deuxième bague de palier (4) pouvant tourner l'une par rapport à l'autre et définissant entre elles un espace de roulement (6) dans lequel sont agencés plusieurs corps de roulement (8), qui permettent une rotation relative de la première bague de palier (2) et de la deuxième bague de palier (4) l'une par rapport à l'autre, les corps de roulement (8) étant des rouleaux cylindriques qui sont agencés en plusieurs rangées dans l'espace de roulement (6), la première et/ou la deuxième bague de palier (2, 4) étant réalisée en deux parties et présentant une première partie de bague de palier (2-1 ; 4-1) et une deuxième partie de bague de palier (2-2 ; 4-2), la première partie de bague de palier (2-1 ; 4-1) et la deuxième partie de bague de palier (2-2, 4-2) étant reliées par un élément de liaison (18), la première et la deuxième partie de bague de palier (2-1, 4-1, 2-2, 4-2) étant appliquées au moins partiellement l'une contre l'autre dans la direction axiale, **caractérisée en ce que** les deux surfaces situées l'une contre l'autre sont aussi lisses que possible pour obtenir un effet d'aspiration, de telle sorte que les deux parties de bague de palier (2-1, 4-1, 2-2, 4-2) adhèrent l'une à l'autre dans une certaine mesure, l'élément de liaison (18) présentant au moins un premier élément (20) et un deuxième élément (22) .

2. Unité de palier selon la revendication 1, dans laquelle la première et la deuxième partie de bague de palier (2-1, 4-1, 2-2, 4-2) présentent chacune un évidement (16-1, 16-2), l'évidement étant agencé respectivement sur le côté de la partie de bague de palier respective (2-1, 4-1, 2-2, 4-2) détourné radialement de l'espace de roulement, les deux évidements (16-1, 16-2) étant conçus pour former, dans un état dans lequel les deux parties de bague de palier (2-1, 4-1, 2-2, 4-2) sont appliquées l'une contre l'autre, un évidement commun dans lequel est reçu l'élément de liaison (18).

3. Unité de palier selon l'une quelconque des revendications précédentes, dans laquelle la première et la deuxième bague de palier (2 ; 4) sont formées en deux parties, et les deux parties de bague de palier (2-1, 2-2) de la première bague de palier (2) sont reliées par le premier élément de liaison (18) et les deux parties de bague de palier (4-1, 4-2) de la deuxième bague de palier (4) sont reliées par un deuxième élément de liaison (10), notamment une bague de serrage, de préférence en acier.

4. Unité de palier selon la revendication 1, dans laquelle le premier élément (20) est formé comme un élément de support pour le deuxième élément (22).

5. Unité de palier selon la revendication 1, dans laquelle le premier élément (20) présente, sur son côté détourné de l'espace de roulement (6) dans la direction radiale, un évidement (24) dans lequel le deuxième élément (22) est emboîté par complémentarité de forme.

6. Unité de palier selon l'une quelconque des revendications 1 à 5, dans laquelle le premier élément (20) est conçu pour étanchéifier l'espace de roulement (6), et le deuxième élément (22) est conçu pour stabiliser le premier élément (20).

7. Unité de palier selon l'une quelconque des revendications 1 à 6, dans laquelle le premier et le deuxième élément (20, 22) sont fabriqués à partir de matériaux différents.

8. Unité de palier selon la revendication 7, dans laquelle le premier élément (20) est fabriqué à partir d'un élastomère, notamment d'un élastomère thermoplastique, et le deuxième élément (22) est fabriqué à partir d'un matériau rigidifiant, notamment d'une matière plastique thermoplastique.

9. Unité de palier selon l'une quelconque des revendications précédentes, l'unité de palier (1) étant configurée sous la forme d'un palier à cassette, et présentant respectivement sur le côté extérieur axial un joint d'étanchéité (12, 14) qui est conçu pour étanchéifier l'espace de roulement (6) vis-à-vis de l'environnement extérieur.
